# EUROPEAN PATENT SPECIFICATION

(11) **EP 2 544 075 B1**
(45) Date of publication and mention of the grant of the patent: **07.10.2015**
(21) Application number: 12158907.1
(22) Date of filing: 09.03.2012
(51) Int. Cl.: G06F 3/038, G06F 3/0354

(54) **Method for recognizing touch and display apparatus thereof**
Verfahren zur Erkennung einer Berührung und Anzeigevorrichtung dafür
Procédé de reconnaissance tactile et son appareil d'affichage

(30) Priority: 08.07.2011 KR 20110068045
(43) Date of publication of application: 09.01.2013
(73) Proprietor: Samsung Electronics Co., Ltd., Suwon-si, Gyeonggi-do 442-742 (KR)
(72) Inventor: Han, Young-ran, Gyeonggi-do (KR); Choi, Kyoung-oh, Seoul (KR)
(74) Representative: Appleyard Lees

(56) References cited:
- EP-A1- 1 058 181
- US-A1- 2003 179 541
- US-B1- 6 545 669

## Description

### CROSS-REFERENCE TO RELATED APPLICATION

This application claims priority under 35 U.S.C. § 119 from Korean Patent Application No. 10-2011-0068045, filed on July 8, 2011 in the Korean Intellectual Property Office.

### BACKGROUND

### 1. Field

Methods and apparatuses consistent with exemplary embodiments relate to a method for recognizing touch, and more particularly, to recognizing touch in a display system which includes a plurality of touch screens using a digital pen.

### 2. Description of the Related Art

In the related art, touch screens adopt touch sensing devices such as a camera, an Infrared (IR) system, a Resistive system, a Capacitive system, and/or a digital pen to detect a sensing element of a touch screen.

For multi-display systems including a plurality of touch screens adopting a camera, an IR system, a Resistive system, and a Capacitive system without using a digital pen or stylus, it is easy to detect a touched touch screen and a coordinate of a touched point because sensing the coordinate of the touched point is performed by a touch screen.

For example, in a display system with three touch screens A, B and C, if a user touches the touch screen B, the touch screen B detects the touch input of the user and transmits an identifier (ID) of the touch screen B and the coordinate information of the touched point. Since a touch screen touched by a user can confirm the touch event is located on its own screen, a control unit may receive the ID of the touch screen along with the coordinate of the touched point from the touch screen itself.

However, in the case of a method of using a digital pen, a coordinate of a touched point is not detected by a touch screen but by a digital pen, so it is not easy to recognize exactly which touch screen is touched in a multi-display system with a plurality of touch screens.

For example, in a multi-display system including three touch screens A, B and C, and sensing elements built into those touch screens that are identical to one another, if a user touches the touch screen B, a digital pen may detect the coordinate of the touched point but it does not recognize which touch screen A, B or C, was touched.

It may be possible to identify an ID of a touch screen by setting a different sensing element in each touch screen; however, considering the reality of touch screens being mass-produced, it is almost impossible and very costly to set different IDs for each touch screen.

Therefore, there is a need for a method of recognizing which screen is touched and/or selected by a digital pen and a coordinate of a point touched by a digital pen in a multi-display system including a plurality of touch screens.

US 2003/179541 discloses a double screen portable computer which has a clamshell-type case containing a left side video screen and a right side video screen, at least one of which is touch or energy sensitive, whereby the screens can be operated using a pen.

US 6 545 669 describes an apparatus and a process for dragging or manipulating an object across a non-touch sensitive discontinuity between touch-sensitive screens of a computer using a digital pen.

EP 1 058 181 shows a display device having multiple displays being operated with an electronic stylus. The device is capable of allowing a page to be turned to give a feeling as if a page is actually turned.

### SUMMARY

The invention is defined by independent claims 1 and 8. Other features of the invention are apparent from the dependent claims 2-7 and 9-15.

### BRIEF DESCRIPTION OF THE DRAWINGS

For a better understanding of the invention, and to show how embodiments of the same may be carried into effect, reference will now be made, by way of example, to the accompanying diagrammatic drawings.

The above and/or other aspects will be more apparent by describing certain exemplary embodiments with reference to the accompanying drawings, in which:
FIG. 1 is a view illustrating a display system including a plurality of touch screens according to an exemplary embodiment;
FIG. 2 is a view illustrating a touch screen according to an exemplary embodiment;
FIG. 3 is a block diagram illustrating a digital pen according to an exemplary embodiment;
FIGS. 4 and 5 are views provided to explain a method for recognizing touch according to an exemplary embodiment; and
FIG. 6 is a flowchart provided to explain a method for recognizing a touch of a display system according to an exemplary embodiment;

### DETAILED DESCRIPTION OF EXEMPLARY EMBODIMENTS

Certain exemplary embodiments will now be described in greater detail with reference to the accompanying drawings.

In the following description, the same drawing reference numerals are used for the same elements throughout the drawings. The matters defined in the description, such as detailed construction and elements, are provided to assist in a comprehensive understanding of the inventive concept. Therefore, exemplary embodiments can be carried out without those specifically defined matters. Also, well-known functions or constructions are not described in detail since they would obscure the inventive concept with unnecessary detail. The term "unit" as used herein means a hardware component such as a processor or circuit, and/or software component that is executed by a hardware component such as a processor.

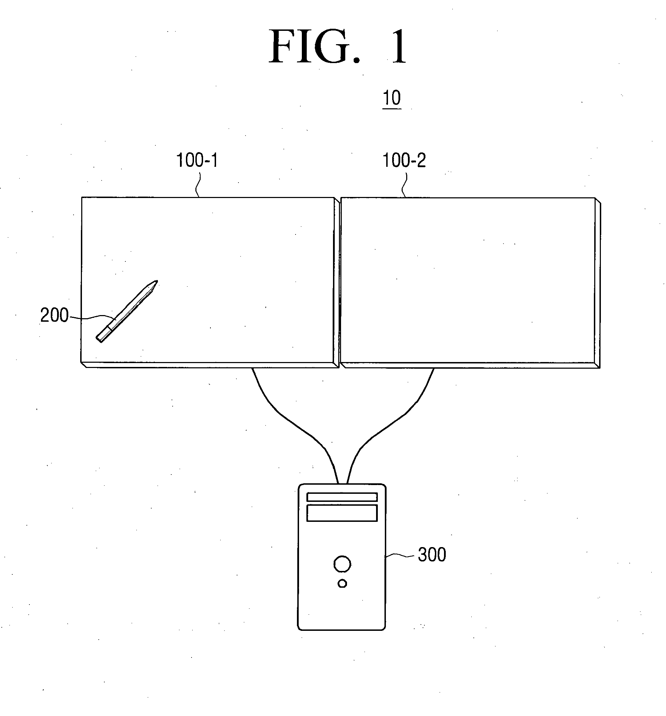

FIG. 1 is a view illustrating a display system including a plurality of touch screens according to an exemplary embodiment. The display system includes a plurality of touch screens. For example first and second touch screens 100-1 and 100-2, a digital pen or stylus 200 and a control unit 300. The system may also be configured to use other input devices known in the art.

In this case, a display system 10 may be embodied as an electronic board. However, this is only an exemplary embodiment, and the technical features of the present exemplary embodiments may be applied to multi-display systems including a plurality of touch screens.

The plurality of touch screens 100-1 and 100-2 include sensing elements which detect a touch of the digital pen 200. For example, a sensing element may be embodied as a special pattern or an IR luminous unit depending on an input method of the digital pen 200. If the digital pen 200 adopts a pattern sensing method, a sensing element is a specific pattern built in the upper portion of a touch screen, and the specific pattern may be detected by the digital pen 200 and a coordinate of a touched point can be recognized. Further, if the digital pen 200 adopts an IR sensing method, a sensing element is an IR luminous unit which has a different frequency according to each coordinate, and the digital pen 200 mounted with an IR light intercepting unit may detect the IR signal and a coordinate of a touched point may be recognized. However, this exemplary embodiment is not limiting and the technical features of the present exemplary embodiments can be applied to other types of sensing elements adopting other sensing methods, in which touch inputs and/or selections are made using the digital pen 200.

Further, the plurality of touch screens 100-1 and 100-2 may be operated according to individually set pulse signals. For instance, the first touch screen 100-1 may be operated by a backlight unit having an A-type pulse signal and the second touch screen 100-2 may be operated by a backlight unit having a B-type pulse signal.

The pulse-widths (on/off section of a pulse) and the pulse-shapes of the first touch screen 100-1 and the second touch screen 100-2 may be set differently. However, the pulse cycles of the first touch screen 100-1 and the second touch screen 100-2 may be identical to each other since the first touch screen 100-1 and the second touch screen 100-2 may be operated using identical brightness.

In this case, a pulse signal may be a PWM pulse signal of a backlight unit of the touch screen 100. However, the technical features of the exemplary embodiments can be applied to other types of pulse signals encoded with a part of a pulse-shaped PWM pulse signal which operates a backlight unit.

In a multi-display system using a plurality of touch screens, the pulse signals of the plurality of touch screens 100-1 and 100-2 may be individually set through the use of firmware.

Although there are two touch screens shown in the exemplary embodiment of FIG. 1, the technical features of the present exemplary embodiments may be applied to display systems including more than two touch screens.

The digital pen 200 detects a coordinate of a touched point by detecting a sensing element provided on the touch screen 100. For example, the digital pen 200 may detect sensing elements by various methods described above.

Further, the digital pen 200 may detect pulse signals operating in the plurality of touch screens 100-1 and 100-2. For example, pulse signals operating in the plurality of touch screens 100-1 and 100-2 have different pulse-widths and pulse-shapes from each other. Accordingly, the digital pen 200 may be mounted with a photo-diode to detect different pulse signals. For example, the digital pen 200 may detect a pulse signal by analyzing a pulse signal of the touch screen 100, using a photo-diode.

The digital pen 200 then may transmit information corresponding to the detected pulse signal and the detected coordinate information of the touched point to the control unit 300 which controls the touch screen 100. For example, the digital pen 200 may transmit the detected information of a pulse signal directly to the control unit 300.

In addition, the digital pen 200 may transmit touch screen information corresponding to the detected pulse signal to the control unit 300. For example, the digital pen 200 may store the plurality of touch screens 300 and their corresponding pulse signals, and read and extract touch screen information corresponding to the detected pulse signal for example, an ID of a touch screen and transmit it to the control unit 300.

The control unit 300 controls the plurality of touch screens 100-1 and 100-2 by receiving a user's command. Especially, the control unit 300 recognizes a touched point and a touched screen out of the plurality of touch screens using pulse signal information transmitted from the digital pen 200 and a coordinate of a touched point.

In the case that a detected pulse signal is transmitted directly from the digital pen 200, the control unit 300 may recognize a touched touch screen by reading and extracting touch screen information corresponding to at least one characteristic of the detected pulse signal from a memory. The control unit 300 may also control the touched touch screen to display an object at a touched point of the detected coordinate of the touched touch screen.

When touch screen information corresponding to the detected pulse signal is transmitted from the digital pen 200, the control unit 300 may control the touched touch screen to display an object at the detected coordinate of the touched touch screen by immediately recognizing the corresponding touch screen.

For example, the control unit 300 may be an external apparatus as illustrated in FIG. 1. The control unit could also be embodied as a control unit built inside of the touch screen 100. For example, the digital pen 200 may transmit information corresponding to a pulse signal and coordinate information of the touched point to control units built into the plurality of touch screens respectively or only to the control unit of the touched touch screen.

As described above, because a touched touch screen is recognized by detecting a pulse signal operating the touch screen, a user may input a command by touch more accurately.

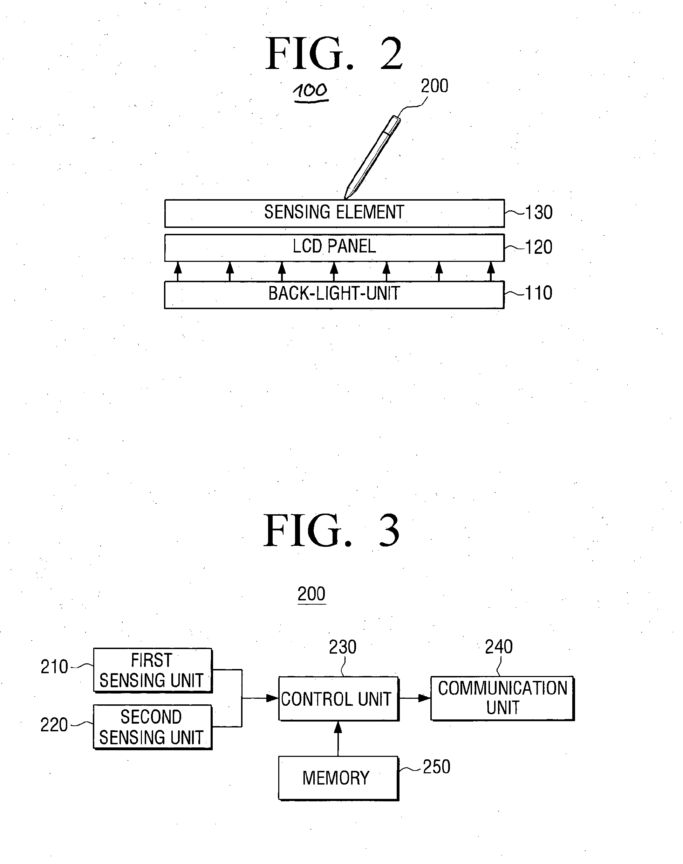

FIG. 2 and FIG. 3 illustrate elements of the touch screen 100 and the digital pen 200 which will be explained as below.

FIG. 2 is a view illustrating the touch screen 100 according to an exemplary embodiment. The touch screen 100 includes, as illustrated in FIG. 2, a backlight unit 110, an LCD panel 120 and a sensing element 130.

The backlight unit 110 operates sensing elements by receiving signals created in an image processing unit and projects backlight to the LCD panel 120 since the LCD panel 120 may not emit light on its own.

The backlight unit 110 may be operated in a method of PWM. The pulse signals according to a method of PWM may be set differently for each of the plurality of touch screens 100-1 and 100-2 by user setting. The plurality of touch screens 100-1 and 100-2 may be set to be operated by pulse signals having different pulse-widths on/off section of a pulse or pulse-shapes. However, the pulse cycles of the pulse signals operating the plurality of touch screens 100-2, 100-2 may be identical to each other. This is because the first touch screen 100-1 and the second touch screen 100-2 may be operated using identical brightness settings.

The LCD panel 120 makes an image signal visible by adjusting a penetration rate of backlight emitted from the backlight unit 110 to have the image displayed on a screen. The LCD panel 110 is manufactured by arranging two circuit boards with an electrode to face each other and injected with a liquid substance between the two circuit boards. When a voltage is applied to the electrodes, an electric field is generated and adjusts the penetration rate of backlight by having a molecule of the liquid substance injected between the two circuit boards.

The sensing element 130 is a set to detect a coordinate of a point of a touch input of the digital pen 200. The sensing element 130 may be embodied differently according to sensing methods.

For example, in case of a pattern sensing method, the sensing element 130 may be a pattern sheet composed of different patterns for each coordinate point. In case of an IR sensing method, the sensing element 130 may be an IR luminous unit which emits IR signals having different frequencies at each coordinate point. However, the technical features of the present exemplary embodiments may be applied other types of sensing methods used by the sensing element 130 to detect a coordinate point of a touch input by the digital pen 200.

FIG. 3 is a block diagram illustrating the digital pen 200 according to an exemplary embodiment. As illustrated in FIG. 3, the digital pen 200 includes a first sensing unit 210, a second sensing unit 220, a control unit 230, a communication unit 240 and a memory 250.

The first sensing unit 210 detects sensing elements provided on the touch screen 100. The first sensing unit 210 may be embodied in different ways according to different sensing methods.

For example, in case of a pattern sensing method, the first sensing unit 130 may be a pattern sensing unit to detect a differently set pattern for each coordinate of a point. In the case of an IR sensing method, the sensing element 130 may be an IR light intercepting unit to receive an IR signal which may have a different frequency according to each coordinate of a point. However, the technical features of the present exemplary embodiments may be applied to other type of sensing units which detect sensing elements provided on the touch screen 100, using other sensing methods.

The second sensing unit 220 detects a pulse signal which operates the backlight unit 130 provided on the touch screen 100. In this case, the second sensing unit 220 may be embodied as a photo-diode to detect an on and off status of the touch screen 100 in order to confirm a pulse signal of the touch screen 100.

The communication unit 240 may transmit the detected pulse signal and a coordinate of the touched point in a wired or wireless manner to the external control unit 300.

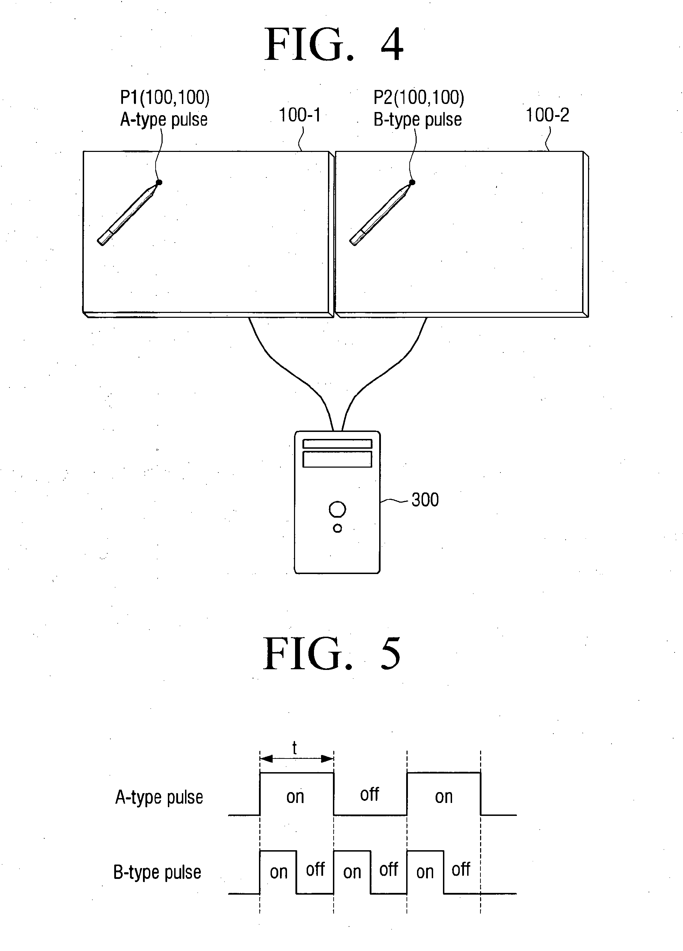

When a user pre-stores pulse signal information corresponding to the plurality of touch screens 100-1 and 100-2, the memory 250 may match the information of a pulse signal and information of its corresponding touch screen. For example, an ID of a touch screen and store them. For instance, the memory 250 may match an A-type pulse signal which turns on and off once during a period of "2t" as illustrated in the upper part of FIG. 5 for the first touch screen 100-1 and store them, and match a B-type pulse signal which turns on and off once during a period of "t" as illustrated in the lower part of FIG. 5 for the second touch screen 100-1 and store them.

The control unit 230 detects a coordinate of the touched point according to a sensing element detected by the first sensing unit 210. Further, the control unit 230 may search information corresponding to a touch screen, using a pulse signal detected by the second sensing unit 220. The control unit 230 controls the communication unit 240 to transmit information of a touch screen corresponding to a pulse signal and the detected coordinate information to the external control unit 300.

As illustrated in FIG. 4, if a user touches a point P1 of the first touch screen 100-1, the control unit 230 detects coordinate information of point P1, 100,100. The second sensing unit 220 detects an A-type pulse signal which turns on and off once during a period of "2t" as illustrated in FIG. 5, and the control unit 230 detects that the touched touch screen is the first touch screen 100-1. The control unit 230 may then transmit information corresponding to a coordinate of the touched point P1, 100,100, and information corresponding to the first touch screen 100-1 to the external control unit 300.

However, in case that a user touches a point P2 of the second touch screen 100-2, the control unit 230 detects coordinate information of point P2, 100,100. The second sensing unit 220 detects a B-type pulse signal which turns on and off once during a period of "t" as illustrated in FIG. 5, and the control unit 230 detects that the touched screen is the second touch screen 100-2. The control unit 230 may then transmit information corresponding to the coordinate of the touched point P2, 100,100, and information corresponding to the second touch screen 100-2 to the external control unit 300.

According to an exemplary embodiment, the pulse-widths of an A-type pulse signal and a B-type pulse signal are different as illustrated in FIG. 5, however the pulse cycles may be identical to each other since the plurality of touch screens 100-1 and 100-2 may be operated using identical brightness.

According to another aspect of the exemplary embodiment, the control unit 230 may also detect a pulse signal using an on and off status of a touch screen detected by the second sensing unit 220 and immediately transmit it to the control unit 300 through the communication unit 240.

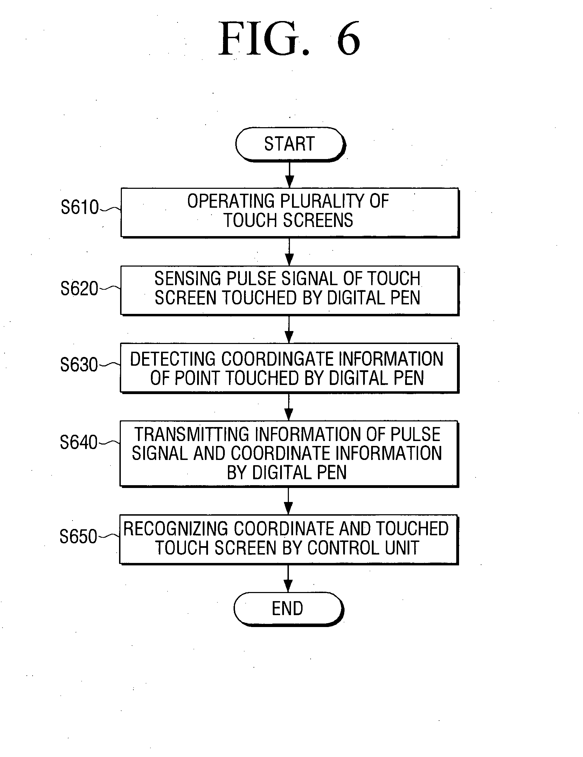

With reference to FIG. 6, a method of recognizing a touch of the display system 10 including the plurality of touch screens 100-1 and 100-2 will be explained below. FIG. 6 is a flowchart provided to explain a method of recognizing a touch according to an exemplary embodiment.

The plurality of touch screens 100-1 and 100-2 are operated by the control unit 300 (S610). The plurality of touch screens 100-1 and 100-2 may be operated by different pulse signals set by a user. At least one of a pulse-width and a pulse-shape of the pulse signals of the plurality of touch screens 100-1 and 100-2 may be set differently according to the plurality of touch screens 100-1 and 100-2.

When the digital pen 200 touches one of the plurality of touch screens 100-1 and 100-2, the digital pen 200 detects a pulse signal of the touched touch screen (S620). The digital pen 200 may detect a pulse signal which operates a backlight unit provided on the touched touch screen, using a photo-diode.

The digital pen 200 detects coordinate information of the touched point (S630). For example, the digital pen 200 may receive an IR signal emitted from a sensing element located at the touched point out of a plurality sensing elements built into the touched touch screen, recognize the sensing element located at the touched point according to a type of the received IR signal, and detect coordinate information corresponding to the detected sensing element. According to another aspect of the exemplary embodiment, the digital pen 200 may detect coordinate information by other methods. For example, the digital pen 200 may detect coordinate information by using specific patterns provided in the touch screen 100.

The digital pen 200 transmits information corresponding to a pulse signal and coordinate information of the touched point to the control unit 300 (S640). For example, the digital pen 200 may transmit information corresponding to a pulse signal itself to the control unit 300, and/or may transmit touch screen information corresponding to the pulse signal to the control unit 300.

When the digital pen 200 transmits pulse signal information and coordinate information of the touched point, the control unit 300 recognizes the touched touch screen and coordinate (S650). For example, if the digital pen 200 transmits the pulse signal information itself, the control unit 300 may recognize the touched touch screen by reading and extracting touch screen information corresponding to the pulse signal information.

As explained above, it is possible for the control unit 300 to control a touched touch screen to display an object at the touched point of the touch screen, using a pulse signal which operates the touch screen 100.

While not restricted thereto, an exemplary embodiment can be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, an exemplary embodiment may be written as a computer program transmitted over a computer-readable transmission medium, such as a carrier wave, and received and implemented in general-use or special-purpose digital computers that execute the programs.

The foregoing exemplary embodiments and advantages are merely exemplary and are not to be construed as limiting to the present inventive concept. The present teaching can be readily applied to other types of apparatuses. Also, the description of the exemplary embodiments is intended to be illustrative, and not to limit the scope of the claims. Many alternatives, modifications, and variations will be apparent to those skilled in the art.

Attention is directed to all papers and documents which are filed concurrently with or previous to this specification in connection with this application and which are open to public inspection with this specification.

All of the features disclosed in this specification (including any accompanying claims, abstract and drawings), and/or all of the steps of any method or process so disclosed, may be combined in any combination, except combinations where at least some of such features and/or steps are mutually exclusive.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for recognizing a touch of a display system (10) including a plurality of touch screens (100-1, 100-2) which are touched by a digital pen, the method being **characterised by**:
the display system operating (S610) each of the plurality of touch screens (100-1, 100-2) according to an individually set pulse signal;
when one of the plurality of touch screens (100-1, 100-2) is touched by the digital pen (200), the digital pen (200) sensing (S620) a pulse signal of the touched touch screen;
the digital pen (200) detecting (S630) coordinate information of the touched point and informs a control device (300) which controls the plurality of touch screens (100-1, 100-2) of it;
the control device (300) recognizing (S650) a touch screen which is touched out of the plurality of touch screens (100-1, 100-2) and a coordinate of the touched point according to characteristics of the sensed pulse signal and the detected coordinate information, respectively.

2. The method as claimed in claim 1, wherein the recognizing comprises transmitting (S640) characteristics of the sensed pulse signal and the detected coordinate information to the control device (300) by the digital pen (200).

3. The method as claimed in claim 2, wherein the recognizing comprises reading and extracting touch screen information corresponding to characteristics of the pulse signal from a memory by the control device (300).

4. The method as claimed in one of claim 1 to claim 3, wherein the operating each of the plurality of touch screens (100-1, 100-2) according to the individually set pulse signal comprises altering at least one of a pulse-width and a pulse-shape of each of the pulse signals provided to the plurality of touch screens (100-1, 100-2) differently for each of the plurality of touch screens (100-1, 100-2).

5. The method as claimed in one of claim 1 to claim 4, wherein the sensing comprises detecting a pulse signal operating a Back-Light-Unit (110) provided on the touched touch screen (100-1, 100-2) by the digital pen (200), using a photo diode.

6. The method as claimed in one of claim 1 to claim 4, wherein the detecting (S630) comprises receiving an IR signal emitted from a sensing element (130) located at the touched point out of sensing elements built into the touched touch screen (100-1, 100-2) by the digital pen (200); and
recognizing a sensing element (130) located at the touched point by a type of the received IR signal and detecting (S630) coordinate information corresponding to a location of the recognized sensing element(130).

7. The method as claimed in claim 5, wherein the pulse signal is a Pulse Width Modulation (PWM) operating signal which operates the Back-Light-Unit (110) provided in the touch screen (100-1, 100-2).

8. A display system (10), comprising:
a plurality of touch screens (100-1, 100-2) being operated with a digital pen, the system being **characterised in that** the plurality of touch screens (100-1, 100-2) are operated respectively according to individually set pulse signals; and
a control device (300) to control an operation of the plurality of touch screens (100-1, 100-2), wherein, when one of the plurality of touch screens (100-1, 100-2) is touched, the digital pen (200) senses (S620) a pulse signal of the touched touch screen, detects (S630) coordinate information of the touched point and informs the control device (300) of it,
wherein the control device (300) recognizes (S650) a coordinate of the touched point and the touched touch screen out of the plurality of touch screens (100-1, 100-2) by the detected coordinate information and characteristics of the pulse signal sensed by the digital pen (200), respectively.

9. The system as claimed in claim 8, wherein the digital pen (200) transmits (S640) characteristics of the sensed pulse signal and the detected coordinate information to the control device (300).

10. The system as claimed in claim 9, wherein the control device (300) reads and extracts touch screen information corresponding to characteristics of the pulse signal from a memory, and recognizes the touch screen which is touched out of the plurality of touch screens (100-1, 100-2).

11. The system as claimed in one of claim 8 to claim 10, wherein the control device (300) alters at least one of a pulse-width and a pulse-shape of each of pulse signals provided to the plurality of touch screens (100-1, 100-2) differently for each of the plurality of touch screens (100-1, 100-2).

12. The system as claimed in one of claim 8 to claim 11, wherein the digital pen (200) detects, using a photo diode, a pulse signal operating a Back-Light-Unit (110) provided in the touched touch screen (100).

13. The system as claimed in one of claim 8 to claim 10, wherein the digital pen (200) receives an IR signal emitted from a sensing element located at the touched point out of sensing elements (130) built into the touched touch screen (100-1, 100-2), recognizes a sensing element (130) located at the touched point by a type of the received IR signal, and detects (S630) coordinate information corresponding to a location of the recognized sensing element (130).

14. The system as claimed in claim 12, wherein the pulse signal is a Pulse-width Modulation (PWM) operating signal operating the Back-Light-Unit (110) provided in the touch screen (100-1, 100-2).

15. The system as claimed in one of claim 8 to claim 13, wherein the control device (300) controls the recognized touch screen (100-1, 100-2) to display an object according to the recognized touch screen and a coordinate of the touched point.

## Patentansprüche

1. Verfahren zum Erkennen einer Berührung eines Anzeigesystems (10), das mehrere Berührungsbildschirme (100-1, 100-2) aufweist, die von einem digitalen Stift berührt werden, wobei das Verfahren **gekennzeichnet ist durch**:
Betreiben (S610), von dem Anzeigesystem, jedes der mehreren Berührungsbildschirme (100-1, 100-2) in Übereinstimmung mit einem einzeln gesetzten Pulssignal;
wenn einer der mehreren Berührungsbildschirme (100-1, 100-2) von dem digitalen Stift (200) berührt wird, Erfassen (S620), **durch** den digitalen Stift (200), eines Pulssignals des berührten Berührungsbildschirms;
Detektieren (S630), **durch** den digitalen Stift (200), von Koordinateninformationen des berührten Punktes und Informieren einer Steuervorrichtung (300), die die mehreren Berührungsbildschirme (100-1, 100-2) steuert;
Erkennen (S650), **durch** die Steuervorrichtung (300), eines berührten Berührungsbildschirms der mehreren Berührungsbildschirme (100-1, 100-2) und einer Koordinate des berührten Punktes in Übereinstimmung mit Eigenschaften des erfassten Pulssignals bzw. der detektierten Koordinateninformationen.

2. Verfahren nach Anspruch 1, wobei das Erkennen das Übertragen (S640) von Eigenschaften des erfassten Pulssignals und der detektierten Koordinateninformationen an die Steuervorrichtung (300) durch den digitalen Stift (200) umfasst.

3. Verfahren nach Anspruch 2, wobei das Erkennen das Lesen und Extrahieren von Berührungsbildschirminformationen, die Eigenschaften des Pulssignals entsprechen, aus einem Speicher durch die Steuervorrichtung (300) umfasst.

4. Verfahren nach einem der Ansprüche 1 bis 3, wobei das Betreiben jedes der mehreren Berührungsbildschirme (100-1, 100-2) in Übereinstimmung mit den einzeln gesetzten Pulssignalen das Verändern mindestens einer Pulsbreite und einer Pulsform jedes der Pulssignale umfasst, die den mehreren Berührungsbildschirmen (100-1, 100-2) für jeden der mehreren Berührungsbildschirme (100-1, 100-2) unterschiedlich bereitgestellt werden.

5. Verfahren nach einem der Ansprüche 1 bis 4, wobei das Erfassen das Detektieren eines Pulssignals, das eine Hintergrundbeleuchtungseinheit (110) betreibt, die auf dem berührten Berührungsbildschirm (100-1, 100-2) bereitgestellt ist, durch den digitalen Stift (200) unter Verwendung einer Fotodiode umfasst.

6. Verfahren nach einem der Ansprüche 1 bis 4, wobei das Detektieren (S630) das Empfangen eines IR-Signals, das von einem an dem berührten Punkt befindlichen Sensorelement (130) aus Sensorelementen emittiert wird, die in den berührten Berührungsbildschirm (100-1, 100-2) eingebaut sind, durch den digitalen Stift (200) umfasst; und
Erkennen eines Sensorelements (130), das sich an dem berührten Punkt befindet, durch einen Typ des empfangenen IR-Signals und Detektieren (S630) von Koordinateninformationen, die einer Position des erkannten Sensorelements (130) entsprechen.

7. Verfahren nach Anspruch 5, wobei das Pulssignal ein Pulsbreitenmodulations-(PWM)-Betriebssignal ist, das die Hintergrundbeleuchtungseinheit (110) betreibt, die in dem Berührungsbildschirm (100-1, 100-2) bereitgestellt ist.

8. Anzeigesystem (10), umfassend:
mehrere Berührungsbildschirme (100-1, 100-2), die mit einem digitalen Stift betrieben werden, wobei das System **dadurch gekennzeichnet ist, dass** die mehreren Berührungsbildschirme (100-1, 100-2) jeweils in Übereinstimmung mit einzeln gesetzten Pulssignalen betrieben werden; und
eine Steuervorrichtung (300) zum Steuern eines Betriebs der mehreren Berührungsbildschirme (100-1, 100-2), wobei, wenn einer der mehreren Berührungsbildschirme (100-1, 100-2) berührt wird, der digitale Stift (200) ein Pulssignal des berührten Berührungsbildschirms erfasst (S620), Koordinateninformationen des berührten Punktes detektiert (S630) und die Steuervorrichtung (300) darüber informiert,
wobei die Steuervorrichtung (300) eine Koordinate des berührten Punktes und den berührten Berührungsbildschirm der mehreren Berührungsbildschirme (100-1, 100-2) durch die detektierten Koordinateninformationen bzw. Eigenschaften des Pulssignals, das von dem digitalen Stift (200) erfasst wird, erkennt (S650).

9. Verfahren nach Anspruch 8, wobei der digitale Stift (200) Eigenschaften des erfassten Pulssignals und der detektierten Koordinateninformationen an die Steuervorrichtung (300) überträgt (S640).

10. System nach Anspruch 9, wobei die Steuervorrichtung (300) Berührungsbildschirminformationen, die Eigenschaften des Pulssignals entsprechen, aus einem Speicher liest und extrahiert und den Berührungsbildschirm erkennt, der aus den mehreren Berührungsbildschirmen (100-1, 100-2) berührt wird.

11. System nach einem der Ansprüche 8 bis 10, wobei die Steuervorrichtung (300) mindestens eine einer Pulsbreite und einer Pulsform jedes der Pulssignale verändert, die den mehreren Berührungsbildschirmen (100-1, 100-2) für jeden der Berührungsbildschirme (100-1, 100-2) unterschiedlich bereitgestellt werden.

12. System nach einem der Ansprüche 8 bis 11, wobei der digitale Stift (200) unter Verwendung einer Fotodiode ein Pulssignal detektiert, das eine Hintergrundbeleuchtungseinheit (110) betreibt, die in dem berührten Berührungsbildschirm (100) bereitgestellt ist.

13. System nach einem der Ansprüche 8 bis 10, wobei der digitale Stift (200) ein IR-Signal empfängt, das von einem an dem berührten Punkt befindlichen Sensorelement aus Sensorelementen (130) emittiert wird, die in den berührten Berührungsbildschirm (100-1, 100-2) eingebaut sind, ein Sensorelement (130), das sich an dem berührten Punkt befindet, durch einen Typ des empfangenen IR-Signals erkennt und Koordinateninformationen detektiert (S630), die einer Position des erkannten Sensorelements (130) entsprechen.

14. System nach Anspruch 12, wobei das Pulssignal ein Pulsbreitenmodulations-(PWM)-Betriebssignal ist, das die Hintergrundbeleuchtungseinheit (110) betreibt, die in dem Berührungsbildschirm (100-1, 100-2) bereitgestellt ist.

15. System nach einem der Ansprüche 8 bis 13, wobei die Steuervorrichtung (300) den erkannten Berührungsbildschirm (100-1, 100-2) derart steuert, dass ein Objekt in Übereinstimmung mit dem erkannten Berührungsbildschirm und einer Koordinate des berührten Punktes angezeigt wird.

## Revendications

1. Procédé de reconnaissance tactile d'un système d'affichage (10) comprenant une pluralité d'écrans tactiles (100-1, 100-2) qui sont pressés par un stylo numérique, le procédé étant **caractérisé par** :
le système d'affichage commandant (S610) chacun de la pluralité d'écrans tactiles (100-1, 100-2) selon un signal d'impulsion défini individuellement ;
lorsqu'un de la pluralité d'écrans tactiles (100-1, 100-2) est pressé par le stylo numérique (200), le stylo numérique (200) détectant (S620) un signal d'impulsion de l'écran tactile pressé ;
le stylo numérique (200) détectant (S630) des informations de coordonnées de point pressé et informant un dispositif de commande (300) qui commande la pluralité d'écrans tactiles (100-1, 100-2) ;
le dispositif de commande (300) reconnaissant (S650) un écran tactile qui est pressé parmi la pluralité d'écrans tactiles (100-1, 100-2) et une coordonnée du point pressé selon des caractéristiques du signal d'impulsion détecté et les informations de coordonnées détectées, respectivement.

2. Procédé selon la revendication 1, dans lequel l'étape de reconnaissance comprend transmettre (S640) des caractéristiques du signal d'impulsion détecté et les informations de coordonnées détectées au dispositif de commande (300) par le stylo numérique (200).

3. Procédé selon la revendication 2, dans lequel l'étape de reconnaissance comprend lire et extraire des informations d'écran tactile correspondant à des caractéristiques du signal d'impulsion à partir d'une mémoire par le dispositif de commande (300).

4. Procédé selon l'une quelconque des revendications 1 à 3, dans lequel l'étape consistant à commander chacun de la pluralité d'écrans tactiles (100-1, 100-2) selon le signal d'impulsion défini individuellement comprend modifier au moins un élément parmi une largeur d'impulsion et une forme d'impulsion de chacun des signaux d'impulsion fournis à la pluralité d'écrans tactiles différemment pour chacun de la pluralité d'écrans tactiles (100-1, 100-2).

5. Procédé selon l'une quelconque des revendications 1 à 4, dans lequel l'étape de détection comprend détecter un signal d'impulsion commandant une unité de rétroéclairage (110) fournie sur l'écran tactile (100-1, 100-2) pressé par le stylo numérique (200), à l'aide d'une photodiode.

6. Procédé selon l'une quelconque des revendications 1 à 4, dans lequel l'étape de détection (S630) comprend recevoir un signal IR émis à partir d'un élément de détection (130) situé au niveau du point pressé parmi des éléments de détection incorporés dans l'écran tactile (100-1, 100-2) pressé par le stylo numérique (200) ; et
reconnaître un élément de détection (130) situé au niveau du point pressé par un type du signal IR reçu et détecter (S630) des informations de coordonnées correspondant à un emplacement de l'élément de détection (130) reconnu.

7. Procédé selon la revendication 5, dans lequel le signal d'impulsion est un signal de commande de modulation de largeur d'impulsion (PWM) qui commande l'unité de rétroéclairage (110) fournie dans l'écran tactile (100-1, 100-2).

8. Système d'affichage (10), comprenant :
une pluralité d'écrans tactiles (100-1,100-2) qui sont pressés par un stylo numérique, le système étant **caractérisé en ce que** la pluralité d'écrans tactiles (100-1, 100-2) sont commandés respectivement selon des signaux d'impulsion définis individuellement ; et
un dispositif de commande (300) permettant de commander une opération de la pluralité d'écrans tactiles (100-1, 100-2),
lorsqu'un écran tactile parmi la pluralité d'écrans tactiles (100-1, 100-2) est pressé, le stylo numérique (200) détecte (S620) un signal d'impulsion de l'écran tactile pressé, détecte (S630) des informations de coordonnées du point pressé et informe le dispositif de commande,
le dispositif de commande (300) reconnaissant (S650) une coordonnée du point pressé et l'écran tactile pressé parmi la pluralité d'écrans tactiles (100-1, 100-2) par les informations de coordonnées détectées et des caractéristiques du signal d'impulsion détecté par le stylo numérique (200), respectivement.

9. Système selon la revendication 8, dans lequel le stylo numérique (200) transmet (S640) des caractéristiques du signal d'impulsion détecté et les informations de coordonnées détectées au dispositif de commande (300).

10. Système selon la revendication 9, dans lequel le dispositif de commande (300) lit et extrait des informations d'écran tactile correspondant à des caractéristiques du signal d'impulsion à partir d'une mémoire, et reconnaît l'écran tactile qui est pressé parmi la pluralité d'écrans tactiles (100-1, 100-2).

11. Système selon l'une quelconque des revendications 8 à 10, dans lequel le dispositif de commande (300) modifie au moins un élément parmi une largeur d'impulsion et une forme d'impulsion de chacun des signaux d'impulsion fournis à la pluralité d'écrans tactiles (100-1, 100-2) différemment pour chacun de la pluralité d'écrans tactiles (100-1, 100-2).

12. Système selon l'une quelconque des revendications 8 à 11, dans lequel le stylo numérique (200) détecte, à l'aide d'une photodiode, un signal d'impulsion commandant une unité de rétroéclairage (110) fournie dans l'écran tactile (100) pressé.

13. Système selon l'une quelconque des revendications 8 à 10, dans lequel le stylo numérique (200) reçoit un signal IR émis à partir d'un élément de détection situé au niveau du point pressé parmi des éléments de détections (130) incorporés dans l'écran tactile (100-1, 100-2) pressé, reconnaît un élément de détection (130) situé au niveau du point pressé par un type du signal IR reçu, et détecte (S630) des informations de coordonnées correspondant à un emplacement de l'élément de détection (130) reconnu.

14. Système selon la revendication 12, dans lequel le signal d'impulsion est un signal de commande de modulation de largeur d'impulsion (PWM) commandant l'unité de rétroéclairage (110) fournie dans l'écran tactile (100-1, 100-2).

15. Système selon l'une quelconque des revendications 8 à 13, dans lequel le dispositif de commande (300) commande l'écran tactile (100-1, 100-2) reconnu pour afficher un objet selon l'écran tactile reconnu et une coordonnée du point pressé.
